# EUROPEAN PATENT APPLICATION

(11) **EP 4 645 450 A1**
(43) Date of publication of application: **05.11.2025**
(21) Application number: 23911353.3
(22) Date of filing: 23.10.2023
(51) Int. Cl.: H01M 4/36

(54) **COATED POSITIVE ELECTRODE ACTIVE MATERIAL AND BATTERY USING SAME**

(30) Priority: 26.12.2022 JP 2022209004
(71) Applicant: Panasonic Intellectual Property Management Co., Ltd., Kadoma-shi, Osaka 571-0057 (JP)
(72) Inventor: TSUJITA, Takuji, Kadoma-shi, Osaka 571-0057 (JP); MASUMOTO, Yui, Kadoma-shi, Osaka 571-0057 (JP); TAKEZAWA, Hideharu, Kadoma-shi, Osaka 571-0057 (JP)
(74) Representative: Novagraaf International SA
(86) International application number: PCT/JP2023/038202
(87) International publication number: WO 2024/142569

(57) **Abstract**

A coated positive electrode active material 13 of the present disclosure includes: a first positive electrode active material 10 including lithium and a transition metal; a coating layer 11 coating the first positive electrode active material 10. The coating layer 11 includes: a first material 14 including a halide; and a second material 15 including at least one selected from the group consisting of a second positive electrode active material capable of absorbing and releasing lithium and a compound including the transition metal. A battery 100 of the present disclosure includes: a positive electrode 23; a negative electrode 26; and an electrolyte layer disposed between the positive electrode 23 and the negative electrode 26. The positive electrode 23 includes the coated positive electrode active material 13 of the present disclosure.

## Description

### TECHNICAL FIELD

The present invention relates to a coated positive electrode active material and a battery including the same.

### BACKGROUND ART

As is known among persons skilled in the art, electrolytes of conventional batteries can be decomposed by active materials. Decomposition of an electrolyte results in formation of a coating formed of a decomposition product of the electrolyte inside an electrode. This brings disadvantages, such as an increase of the internal resistance of a battery and a decrease of the cycle characteristics of a battery.

Decomposition of an electrolyte by an active material is reduced by coating the active material with an appropriate coating material. For example, Patent Literature 1 discloses coating a positive electrode active material with lithium niobate. Patent Literature 2 discloses coating a positive electrode active material with a solid electrolyte including Li, Ti, Al, and F.

### CITATION LIST

### Patent Literature

Patent Literature 1: JP 2009-193940 A
Patent Literature 2: WO 2021/187391 A1

### SUMMARY OF INVENTION

### Technical Problem

The conventional techniques have room for improvement in the discharge capacity and the resistance value.

### Solution to Problem

The present disclosure provides a coated positive electrode active material including:
a first positive electrode active material including lithium and a transition metal; and
a coating layer coating the first positive electrode active material, wherein
the coating layer includes: a first material including a halide; and a second material including at least one selected from the group consisting of a second positive electrode active material capable of absorbing and releasing lithium and a compound including the transition metal.

### Advantageous Effects of Invention

According to the technique of the present disclosure, the discharge capacity of a battery and the resistance value thereof can be improved.

### BRIEF DESCRIPTION OF DRAWINGS

FIG. 1 is a schematic cross-sectional view showing a configuration of a coated positive electrode active material according to Embodiment 1.
FIG. 2 is a schematic cross-sectional view showing a configuration of a battery according to Embodiment 2.
FIG. 3 is a STEM image and elemental maps of a coated positive electrode active material of Example 1.
FIG. 4 is a STEM image and elemental maps of a coated positive electrode active material of Example 2.

### DESCRIPTION OF EMBODIMENTS

Embodiments of the present disclosure will be described hereinafter with reference to the drawings. The present disclosure is not limited to the following embodiments.

### (Embodiment 1)

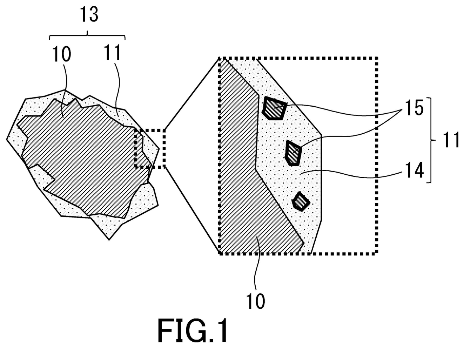

FIG. 1 is a schematic cross-sectional view showing a configuration of a coated positive electrode active material 13 according to Embodiment 1. The coated positive electrode active material 13 includes a first positive electrode active material 10 and a coating layer 11. The first positive electrode active material 10 has, for example, a particle shape. The coating layer 11 coats at least a portion of a surface of the particle of the first positive electrode active material 10.

The first positive electrode active material 10 includes lithium and a transition metal and is capable of absorbing and releasing lithium. The coating layer 11 includes a first material 14 and a second material 15. The first material 14 and the second material 15 have different compositions from each other. The first material 14 includes a halide. The second material 15 includes at least one selected from the group consisting of a second positive electrode active material and a compound A. The second positive electrode active material is capable of absorbing and releasing lithium. The compound A includes a transition metal that is the same as the transition metal included in the first positive electrode active material 10.

The coating layer 11 prevents direct contact between other materials, such as an electrolyte solution and a solid electrolyte, and the first positive electrode active material 10. This reduces decomposition of the other materials, namely, the electrolyte solution or the solid electrolyte. Since the halide included in the first material 14 is excellent in oxidation resistance or reduction resistance, the halide included in the first material 14 is unlikely to be decomposed by the first positive electrode active material 10. The second material 15 enhances the electron conductivity of the coating layer 11, and decreases the possibility of isolation of the first positive electrode active material 10 in an electrode of a battery. As a consequence, the discharge capacity of a battery including the coated positive electrode active material 13 is enhanced, and the resistance value of a battery including the coated positive electrode active material 13 is decreased.

Examples of the first positive electrode active material 10 include a lithium-containing transition metal oxide, a lithium-containing transition metal phosphate, a transition metal fluoride, a polyanion material, a fluorinated polyanion material, a transition metal sulfide, a transition metal oxysulfide, and a transition metal oxynitride. It is possible to reduce a manufacturing cost and increase the average discharge voltage by using, particularly, a lithium-containing transition metal oxide or a lithium-containing transition metal phosphate as the positive electrode active material. Examples of the lithium-containing transition metal oxide include lithium cobalt oxide, lithium nickel cobalt aluminum oxide, lithium nickel cobalt manganese oxide, and lithium nickel manganese oxide. Examples of the lithium-containing transition metal phosphate include iron lithium phosphate, vanadium lithium phosphate, cobalt lithium phosphate, and nickel lithium phosphate. At least one of these positive electrode active materials can be used.

The particle of the first positive electrode active material 10 may be a primary particle or a secondary particle. An average particle diameter of the particles of the first positive electrode active material 10 is, for example, 1 µm or more and 10 µm or less. The term "average particle diameter" means a particle diameter (median diameter) at 50% in a volume-based cumulative particle size distribution. The volume-based particle size distribution is measured, for example, with a laser diffraction particle size distribution analyzer.

When a thickness of the coating layer 11 is on the order of nanometers, the average particle diameter of the particles of the first positive electrode active material 10 is approximately equal to the average particle diameter of the particles of the coated positive electrode active material 13.

The first material 14 and the second material 15 may each have a particle shape. The particles of the second material 15 can be dispersed in the coating layer 11. In this case, the effect of the second material 15 is likely to be uniformly exhibited in the coating layer 11.

A ratio between the first material 14 and the second material 15 in the coating layer 11 is not limited to a particular value. The ratio between the first material 14 and the second material 15 may be determined so that the first material 14 is included in the coating layer 11 as its main component. This increases the decomposition reducing effect on other materials, such as an electrolyte solution. In one example, a ratio (m2/m1) of an amount of substance m2 of the second material 15 to an amount of substance m1 of the first material 14 is 0.05 or more and 0.4 or less, and is desirably 0.1 or more and 0.3 or less. The term "main component" refers to a component whose content is highest on an amount-of-substance basis.

The first material 14 may have lithium ion conductivity. In this case, the first positive electrode active material 10 is capable of smoothly absorbing and releasing lithium ions.

The halide as the first material 14 may be an inorganic compound in terms of chemical stability.

The halide can enhance the oxidation resistance of the coating layer 11 owing to a high electronegativity of a halogen. The halide may be a fluoride in terms of oxidation resistance. The term "halide" includes an oxyhalide.

The halide includes, for example, Li, M1, M2, and F. The M1 is at least one selected from the group consisting of Ti and Nb. The M2 is at least one selected from the group consisting of Ca, Mg, Al, Y, and Zr. This halide is called a halide solid electrolyte, and has high lithium ion conductivity.

The halide may consist of Li, the M1, the M2, and F, excluding inevitable impurities.

The M1 may be Ti, and M2 may be Al. In this case, the halide has high lithium ion conductivity.

A ratio of an amount of substance of Li to a sum of amount of substances of the M1 and the M2 is, for example, 0.5 or more and 4.5 or less. When the ratio is in this range, the halide has high lithium ion conductivity.

The halide may have a composition represented by the following formula (1). In the formula (1), M is at least one selected from the group consisting of Ca, Mg, Al, Y, and Zr. The symbols x, y, and b satisfy 0 < x < 1, 0 < y < 1, 0 < x + y ≤ 1, and 0.8 ≤ b ≤ 1.1. The halide having the composition represented by the formula (1) has high lithium ion conductivity.

Li_{6-(5-x-2y)b}(Nb_{1-x-y}TiₓM_{y})_{b}F₆ Formula (1)

The halide as the first material 14 is desirably free of sulfur. In this case, the first material 14 can avoid becoming a source of hydrogen sulfide.

The second material 15 may include the compound A. In this case, the compound A may be a compound capable of absorbing and releasing lithium. That is, the compound A may have a function as an active material. In this case, enhancement of the discharge capacity of a battery and decrease of the resistance value thereof are advantageously achieved.

The compound A may be formed from a group of elements that is the same as a group of elements forming the first positive electrode active material 10. Specifically, the compound A may have the same composition as that of the first positive electrode active material 10. In this case, enhancement of the discharge capacity of a battery and decrease of the resistance value thereof are advantageously achieved.

The second material 15 may include the second positive electrode active material. The second positive electrode active material can be an active material capable of absorbing and releasing lithium, the active material having a different composition from that of the first positive electrode active material 10. Examples of the second positive electrode active material include the materials mentioned above as examples for the first positive electrode active material 10. For example, when the first positive electrode active material 10 includes lithium cobalt oxide, lithium nickel cobalt aluminum oxide, lithium nickel cobalt manganese oxide, or the like can be used as the second positive electrode active material.

The first material 14 and the second material 15 may be respectively the halide and the compound A.

An average thickness of the coating layer 11 is, for example, 1 nm or more and 150 nm or less, desirably 100 nm or less, more desirably 50 nm or less. The enhancing effect on the discharge capacity of a battery and the decreasing effect on the resistance value thereof can be increased by appropriately adjusting the average thickness of the coating layer 11. The average thickness of the coating layer 11 can be calculated from a STEM image, which is obtained with a scanning transmission electron microscope (STEM). The average thickness thereof can be the average of thicknesses at two or more random points (for example, five points).

The particle of the compound A and the particle of the second positive electrode active material may each be a nanoparticle. The particles of the compound A and/or the particles of the second positive electrode active material are desirably dispersed in the coating layer 11. Hence, the particle of the compound A and the particle of the second positive electrode active material desirably have a particle diameter smaller than the thickness of the coating layer 11. That is, the particle of the second material 15 having a particle diameter smaller than the thickness of the coating layer 11 can be present in the coating layer 11. In the above case, a good balance can be achieved between the decomposition reducing effect on other materials, such as an electrolyte solution, the enhancing effect on the discharge capacity of a battery, and the decreasing effect on the resistance value thereof. The particle diameter of the particle of the second material 15 is a diameter of a circle whose area is equal to the area calculated for the particle of the second material 15 in a transmission electron microscope image. The average particle diameter of the particles of the compound A and that of the particles of the second positive electrode active material may be smaller than the thickness of the coating layer 11.

The coating layer 11 may coat the entire surface of the particle of the first positive electrode active material 10, or may coat a portion of the surface of the particle of the first positive electrode active material 10.

The coating layer 11 may include a material other than the first material 14 and the second material 15. Examples of the material include a conductive carbon material. The coating layer 11 may include only the first material 14 and the second material 15, excluding inevitable impurities.

The presence of the second material 15 in the coating layer 11 can be confirmed by element mapping of the particle of the coated positive electrode active material 13. An elemental map can be obtained by a combination of energy dispersive X-ray spectroscopy and a scanning transmission electron microscope (STEM-EDX).

The coated positive electrode active material 13 is obtained by attaching a coating material to the surface of the particle of the first positive electrode active material 10. The coating material includes the first material 14 and the second material 15. For example, the coating material is prepared by mixing the first material 14 and the second material 15. After that, the coating material is attached to the surface of the first positive electrode active material 10 to form the coating layer 11. The coated positive electrode active material 13 of Embodiment 1 can be manufactured effectively by this method.

The method for attaching the coating material to the surface of the first positive electrode active material 10 is not limited to a particular method. As described in Patent Literature 2, for example, a powder of the first positive electrode active material 10 and a powder of the coating material are mixed at an appropriate ratio to give a mixture. The mixture is subjected to milling to provide mechanical energy to the mixture. A mixing machine, such as a ball mill, can be used for the milling. The milling may be performed in a dry and inert atmosphere to suppress oxidation of the materials.

The coated positive electrode active material 13 may be manufactured by a dry composite particle forming method. Processing by the dry composite particle forming method includes providing mechanical energy generated by at least one selected from the group consisting of impact, compression, and shearing to the first positive electrode active material 10 and the coating material.

Example of the apparatus capable of providing such mechanical energy to the mixture of the first positive electrode active material 10 and the coating material include processing apparatuses (composite particle forming machines) such as a ball mill, Mechanofusion (manufactured by HOSOKAWA MICRON CORPORATION), Nobilta (manufactured by HOSOKAWA MICRON CORPORATION), and BALANCE GRAN (manufactured by FREUND-TURBO CORPORATION).

Regardless of which of the apparatuses is used, the thickness of the coating layer 11 can be controlled by adjusting conditions such as the rotation speed, the processing time, and the amounts of the raw material powders added. The processing using the above apparatuses is not essential. The coated positive electrode active material 13 may be manufactured by mixing the first positive electrode active material 10 and the coating material using a mortar, a mixer, or the like. The coating material may be deposited on the surface of the first positive electrode active material 10 by a method such as spraying, spray dry coating, electrodeposition, immersion, or mechanical mixing using a disperser.

### (Embodiment 2)

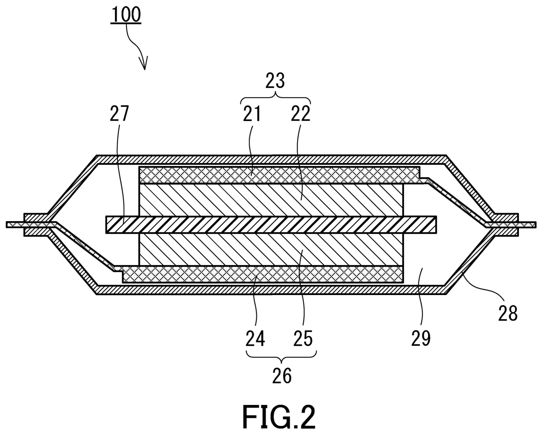

FIG. 2 is a cross-sectional view showing a battery 100 according to Embodiment 2. The battery 100 includes a positive electrode 23, a negative electrode 26, a non-aqueous electrolyte 29, a separator 27, and an outer package 28. The positive electrode 23 includes a positive electrode current collector 21 and a positive electrode active material layer 22. The positive electrode active material layer 22 is disposed on the positive electrode current collector 21. The negative electrode 26 includes the negative electrode current collector 24 and the negative electrode active material layer 25. The negative electrode active material layer 25 is disposed on the negative electrode current collector 24. The separator 27 is disposed between the positive electrode 23 and the negative electrode 26. The positive electrode 23 and the negative electrode 26 face each other with the separator 27 in between. The positive electrode 23, the negative electrode 26, the separator 27, and the non-aqueous electrolyte 29 are contained in the outer package 28. The battery 100 is typically a secondary battery.

The positive electrode 23 includes the coated positive electrode active material 13 of Embodiment 1. In this case, decomposition of other materials, such as an electrolyte solution, is reduced in the positive electrode 23. As a result, the enhancing effect on the discharge capacity and the reducing effect on the resistance value are achieved.

The positive electrode current collector 21 is, for example, a sheet or film formed of a metal material, such as aluminum, an aluminum alloy, stainless steel, titanium, or a titanium alloy. The sheet or film may be porous or non-porous. Metal foil, metal mesh, or the like is used as the sheet or film. The surface of the positive electrode current collector 21 may be coated with a carbon material as a conductive auxiliary material.

The positive electrode active material layer 22 may include an additional material, such as a conductive additive, an ion conductor, or a binder.

The conductive additive and the ion conductor are used to decrease the resistance of the positive electrode 23. Examples of the conductive additive include a carbon material and a conductive polymer compound. Examples of the carbon material include carbon black, graphite, acetylene black, a carbon nanotube, a carbon nanofiber, graphene, fullerene, and graphite oxide. Examples of the conductive polymer compound include polyaniline, polypyrrole, and polythiophene. At least one selected from these conductive additives can be used.

Examples of the ion conductor include gel electrolytes such as polymethyl methacrylate and polymethyl methacrylate, organic solid electrolytes such as polyethylene oxide, and inorganic solid electrolytes such as Li₇La₃Zr₂O₁₂. At least one selected from these ion conductors can be used.

The binder can be used to enhance binding strength between the materials of the negative electrode 26. Examples of the binder include polymer materials, such as polyvinylidene fluoride, vinylidene fluoride-hexafluoropropylene copolymer, vinylidene fluoride-tetrafluoroethylene copolymer, polytetrafluoroethylene, carboxymethyl cellulose, polyacrylic acid, styrene-butadiene copolymer rubber, polypropylene, polyethylene, and polyimide. At least one selected from these binders can be used.

The negative electrode current collector 24 is, for example, a sheet or film formed of a metal material, such as stainless steel, nickel, a nickel alloy, copper, or a copper alloy. The sheet or film may be porous or non-porous. Metal foil, metal mesh, or the like is used as the sheet or film. The surface of the negative electrode current collector 24 may be coated with a carbon material as a conductive auxiliary material.

The negative electrode active material layer 25 may include a negative electrode active material capable of absorbing and releasing lithium. Examples of the negative electrode active material capable of absorbing and releasing lithium include lithium titanate, graphite, silicon, a silicon-including oxide, a zinc alloy, lithium metal, and a lithium alloy. At least one selected from these negative electrode active materials can be used.

The negative electrode active material layer 25 may include an additional material, such as a conductive additive, an ion conductor, or a binder. As the conductive additive, the ion conductor, and the binder of the negative electrode active material layer 25 can also be used the materials that can be included in the positive electrode active material layer 22.

The non-aqueous electrolyte 29 may be included in the positive electrode 23, the negative electrode 26, and the separator 27. An internal space of the outer package 28 may be filled with the non-aqueous electrolyte 29. Lithium ions can transfer between the positive electrode 23 and the negative electrode 26 through the action of the non-aqueous electrolyte 29. The non-aqueous electrolyte 29 may include a non-aqueous electrolyte solution, a gel electrolyte, or an ionic liquid.

The non-aqueous electrolyte solution includes, for example, a non-aqueous solvent and a lithium salt.

As the non-aqueous solvent can be used a cyclic carbonate ester, a chain carbonate ester, a cyclic ether, a chain ether, a cyclic ester, a chain ester, a fluorine solvent, or a nitrile. Examples of the cyclic carbonate ester include ethylene carbonate, propylene carbonate, and butylene carbonate. Examples of the chain carbonate ester include dimethyl carbonate, ethyl methyl carbonate, and diethyl carbonate. Examples of the cyclic ether include tetrahydrofuran, 1,4-dioxane, and 1,3-dioxolane. Examples of the chain ether include 1,2-dimethoxyethane and 1,2-diethoxyethane. Examples of the cyclic ester include γ-butyrolactone. Examples of the chain ester include methyl acetate. Examples of the fluorine solvent include fluoroethylene carbonate, fluoromethyl propionate, fluorobenzene, fluoroethyl methyl carbonate, and fluorodimethylene carbonate. Examples of the nitrile include acetonitrile. At least one selected from these non-aqueous solvents can be used.

Examples of the lithium salt include lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bisperfluoroethylsulfonylimide (LiN(SO₂C₂F₅)₂), LiAsF₆, LiCF₃SO₃, and lithium difluoro(oxalato)borate. At least one selected from these lithium salts can be used.

The gel electrolyte can be a material obtained by impregnating a polymer material with a non-aqueous electrolyte solution. Examples of the polymer material include polyethylene oxide, polyacrylonitrile, polyvinylidene fluoride, polymethyl methacrylate, and a polymer having an ethylene oxide bond.

Examples of a cation of the ionic liquid include an aliphatic chain quaternary cation, an aliphatic cyclic ammonium, and a nitrogen-containing heterocyclic aromatic cation. Examples of the aliphatic chain quaternary cation include tetraalkylammonium and tetraalkylphosphonium. Examples of the aliphatic cyclic ammonium include pyrrolidiniums, morpholiniums, imidazoliniums, tetrahydropyrimidiniums, piperaziniums, and piperidiniums. Examples of the nitrogen-containing heterocyclic aromatic cation include pyridiniums and imidazoliums. Examples of an anion of the ionic liquid include PF₆⁻, BF₄⁻, SbF₆⁻, AsF₆⁻, SO₃CF₃⁻, N(SO₂F)₂⁻, N(SO₂CF₃)₂⁻, N(SO₂C₂F₅)₂⁻, N(SO₂CF₃)(SO₂C₄F₉)⁻, and C(SO₂CF₃)₃⁻. The ionic liquid may include a lithium salt.

The separator 27 is an electrolyte layer having lithium ion conductivity. The material of the separator 27 is not limited to a particular material as long as the separator 27 allows lithium ions to pass through. The material of the separator 27 can be at least one selected from the group consisting of a solid electrolyte, a gel electrolyte, an ion-exchange resin membrane, a semipermeable membrane, or a porous membrane. In the case where the separator 27 is formed of any of these materials, the safety of the battery 100 can be sufficiently ensured. Examples of the solid electrolyte include a sulfide solid electrolyte such as Li₂S-P₂S₅ and an oxide solid electrolyte such as Li₇La₃Zr₂O₁₂ (LLZ). Examples of the gel electrolyte include a gel electrolyte including a fluorine resin such as PVdF. Examples of the ion-exchange resin membrane include a cation-exchange membrane and an anion-exchange membrane. Examples of the porous membrane include a porous polyolefin resin membrane and a porous membrane formed of glass paper obtained by weaving a glass fiber into a non-woven fabric.

The outer package 28 is formed, for example, of a material obtained by laminating metal foil, such as aluminum foil, with a resin film, such as a PET film. The outer package 28 may be a container made of a resin or a metal.

The shape of the battery 100 is not limited to a stacked type. Other examples of the shape of the battery 100 include a coin type, a cylindrical type, a prismatic type, a sheet type, a button type, and a flat type.

The battery 100 may be a solid-state battery.

When the battery 100 is a solid-state battery, a solid electrolyte is included in each of the positive electrode 23, the negative electrode 26, and the separator 27 instead of the non-aqueous electrolyte 29. Examples of the solid electrolyte include a halide solid electrolyte, a sulfide solid electrolyte, an oxide solid electrolyte, a polymer solid electrolyte, and a complex hydride solid electrolyte. At least one selected from these solid electrolytes can be included in each of the positive electrode 23, the negative electrode 26, and the separator 27.

### (Other embodiments)

### (Supplement)

According to the description of the above embodiments, the following techniques are disclosed.

### (Technique 1)

A coated positive electrode active material including:
a first positive electrode active material including lithium and a transition metal; and
a coating layer coating the first positive electrode active material, wherein
the coating layer includes: a first material including a halide; and a second material including at least one selected from the group consisting of a second positive electrode active material capable of absorbing and releasing lithium and a compound including the transition metal.

In this case, the discharge capacity of a battery and the resistance value thereof can be improved.

### (Technique 2)

The coated positive electrode active material according to Technique 1, wherein particles of the second material are dispersed in the coating layer. In this case, the effect of the second material is likely to be uniformly exhibited in the coating layer.

### (Technique 3)

The coated positive electrode active material according to Technique 1 or 2, wherein a particle of the second material having a particle diameter smaller than a thickness of the coating layer is present in the coating layer. A good balance can be achieved between the decomposition reducing effect on other materials, such as an electrolyte solution, the enhancing effect on the discharge capacity of a battery, and the decreasing effect on the resistance value thereof.

### (Technique 4)

The coated positive electrode active material according to any one of Techniques 1 to 3, wherein the second material includes the compound including the transition metal, and the compound including the transition metal is a compound capable of absorbing and releasing lithium. In this case, enhancement of the discharge capacity of a battery and decrease of the resistance value thereof are advantageously achieved.

### (Technique 5)

The coated positive electrode active material according to Technique 4, wherein the compound including the transition metal is formed from a group of elements that is the same as a group of elements forming the first positive electrode active material. In this case, enhancement of the discharge capacity of a battery and decrease of the resistance value thereof are advantageously achieved.

### (Technique 6)

The coated positive electrode active material according to Technique 4 or 5, wherein the compound including the transition metal has a composition that is the same as a composition of the first positive electrode active material. In this case, enhancement of the discharge capacity of a battery and decrease of the resistance value thereof are advantageously achieved.

### (Technique 7)

The coated positive electrode active material according to any one of Techniques 1 to 6, wherein the first material has lithium ion conductivity. In this case, the first positive electrode active material is capable of smoothly absorbing and releasing lithium ions.

### (Technique 8)

The coated positive electrode active material according to any one of Techniques 1 to 7, wherein the first material includes the halide, the halide includes Li, M1, M2, and F, the M1 is at least one selected from the group consisting of Ti and Nb, and the M2 is at least one selected from the group consisting of Ca, Mg, Al, Y, and Zr. This halide is called a halide solid electrolyte, and has high lithium ion conductivity.

### (Technique 9)

The coated positive electrode active material according to Technique 8, wherein the M1 is Ti, and the M2 is Al. In this case, the halide has high lithium ion conductivity.

### (Technique 10)

The coated positive electrode active material according to any one of Techniques 1 to 7, wherein the halide has a composition represented by the following formula (1):
Li_{6-(5-x-2y)b}(Nb_{1-x-y}TiₓM_{y})_{b}F₆ Formula (1), where M is at least one selected from the group consisting of Ca, Mg, Al, Y, and Zr, and x, y, and b satisfy 0 < x < 1, 0 < y < 1, 0 < x + y ≤ 1, and 0.8 ≤ b ≤ 1.1. The halide having the composition represented by the formula (1) has high lithium ion conductivity.

### (Technique 11)

A battery including:
a positive electrode including the coated positive electrode active material according to any one of Techniques 1 to 10;
a negative electrode; and
an electrolyte layer disposed between the positive electrode and the negative electrode.

In this case, decomposition of other materials, such as an electrolyte solution, is reduced in the positive electrode or the negative electrode. As a result, the enhancing effect on the discharge capacity and the reducing effect on the resistance value are achieved.

### EXAMPLES

### (Example 1)

### [Preparation of coating material]

Under an argon atmosphere having a dew point of -60°C or lower, LiF, TiF₄, and AlF₃ which are raw material powders were weighed in a molar ratio of LiF:TiF₄:AlF₃ = 2.7:0.3:0.7. These were pulverized and mixed in a mortar to give a mixture. The mixture was subjected to milling using ø5 mm zirconia balls and a planetary ball mill (Type P-7 manufactured by Fritsch GmbH) at 500 rpm for 12 hours. A powder of a halide solid electrolyte (hereinafter referred to as "LTAF") having a composition Li_{2.7}Ti_{0.3}Al_{0.7}F₆ was obtained in this manner.

A mixture of the LTAF as the first material and lithium cobalt oxide (average particle diameter: 4 µm) as the second material was subjected to milling to give a coating material. The LTAF and the lithium cobalt oxide were finely pulverized by the milling. A mixing machine, such as a ball mill, can be used for the milling. Hereinafter, lithium cobalt oxide may be referred to as "LCO".

### [Production of coated positive electrode active material]

An LCO powder (average particle diameter: 4 µm) was prepared as a positive electrode active material. The coating material was attached to the surface of the LCO particle to form a coating layer. The coating layer was formed by compression shear processing using a composite particle forming machine (NOB-MINI manufactured by HOSOKAWA MICRON CORPORATION). Specifically, the LCO and the coating material were mixed in a mass ratio of 100:3, and the mixture was processed at a rotation speed of 6000 rpm for a processing time of 50 minutes. A coated positive electrode active material of Example 1 was obtained in this manner. A target thickness of the coating layer was 40 nm.

### (Example 2)

A mixture of LTAF as the first material and lithium nickel cobalt manganese oxide (Ni:Co:Mn = 6:2:2; average particle diameter: 5 µm) as the second material was subjected to milling to give a coating material of Example 2. The LTAF and the lithium nickel cobalt manganese oxide were finely pulverized by the milling. Hereinafter, lithium nickel cobalt manganese oxide may be referred to as "NCM".

An NCM powder (average particle diameter: 5 µm) was prepared as the first positive electrode active material. A coated positive electrode active material of Example 2 was produced in the same manner as in Example 1, except that the coating material and the NCM particles of Example 2 were used.

### (Comparative Example 1)

The LCO as used in Example 1 was considered an active material of Comparative Example 1.

### (Comparative Example 2)

A coated positive electrode active material of Comparative Example 2 was produced in the same manner as in Example 1, except that the second material was not used and that the LTAF as the first material was used alone as the coating material.

### [STEM-EDX measurement]

STEM images and elemental maps of the active materials of Example 1 and Example 2 were obtained using a scanning transmission electron microscope (JEM-F200 manufactured by JEOL Ltd.; accelerating voltage: 200 kV) and an energy dispersive X-ray analyzer (System 7 manufactured by Thermo Fisher SCIENTIFIC) equipped with the microscope.

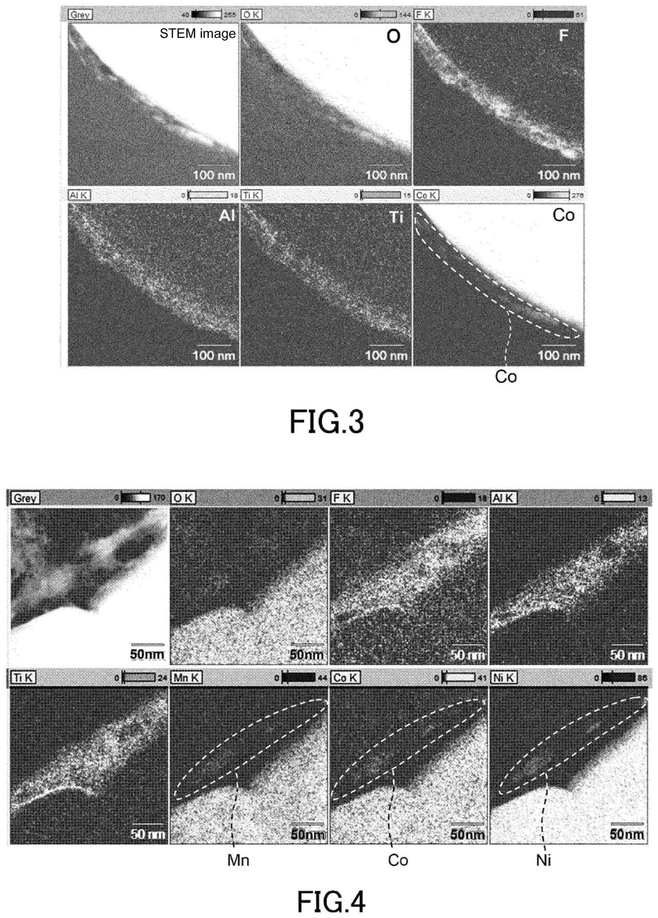

FIG. 3 shows the STEM image and the elemental maps of the coated positive electrode active material of Example 1. The upper left image in FIG. 3 is the STEM image. The other images in FIG. 3 are respectively elemental maps of O, F, Al, Ti, and Co. As shown in the STEM image of FIG. 3, bright white portions represent LCO particles as the first positive electrode active material. The coating layer including LTAF was present around the LCO particles. In particular, as can be understood from the elemental map of Co, Co and O were present also in a region corresponding to the coating layer. That is, the coating layer also included LCO.

FIG. 4 shows the STEM image and the elemental maps of the coated positive electrode active material of Example 2. The upper left image in FIG. 4 is the STEM image. The other images in FIG. 4 are respectively elemental maps of O, F, Al, Ti, Mn, Co, and Ni. As shown in the STEM image of FIG. 4, bright white portions represent NCM particles as the first positive electrode active material. The coating layer including LTAF was present around the NCM particles. In particular, as can be understood from the elemental maps of Mn, Co, and Ni, Mn, Co, Ni, and O were present also in a region corresponding to the coating layer. That is, the coating layer also included NCM.

### [Production of non-aqueous electrolyte battery]

Coin-type non-aqueous electrolyte batteries were produced using the active materials of Example 1, Comparative Example 1, and Comparative Example 2.

### [Production of positive electrode]

The coated positive electrode active material, acetylene black, polyvinylidene fluoride, and N-methyl-2-pyrrolidone were mixed to prepare a positive electrode slurry. A mass ratio between the coated positive electrode active material, the acetylene black, and the polyvinylidene fluoride was 90:7:3. A coating film was formed by applying the positive electrode slurry to one side of a sheet of aluminum foil. After the coating film was dried, the coated aluminum foil was rolled to give a positive electrode including aluminum foil and a positive electrode active material layer.

### [Production of negative electrode]

Lithium titanate (Li₄Ti₅O₁₂; average particle diameter: 5 µm), acetylene black, polyvinylidene fluoride, and N-methyl-2-pyrrolidone were mixed to prepare a negative electrode slurry. A mass ratio between the lithium titanate, the acetylene black, and the polyvinylidene fluoride was 90:7:3. A coating film was formed by applying the negative electrode slurry to one side of a sheet of aluminum foil. After the coating film was dried, the coated aluminum foil was rolled to give a negative electrode including aluminum foil and a negative electrode active material layer.

### [Preparation of non-aqueous electrolyte]

LiBF₄ was dissolved in γ-butyrolactone to give a non-aqueous electrolyte solution. The LiBF₄ concentration in the non-aqueous electrolyte solution was 1.5 mol/L.

### [Production of non-aqueous electrolyte secondary battery]

In an atmosphere having a low dew point, which was -50°C in this case, the positive electrode and the negative electrode were each punched to give a piece having a diameter of 10.8 mm. The positive electrode, a thin polyolefin film, and the negative electrode were disposed inside a coin cell case of 1616 size, and the non-aqueous electrolyte solution was poured into the coin cell case. The coin cell case was sealed with a cover to give a coin-type non-aqueous electrolyte battery.

### [Measurement of initial discharge capacity]

Initial discharge capacities of the batteries of Example 1, Comparative Example 1, and Comparative Example 2 were measured by the following method. Constant current charging was performed at a current of 0.01C until the voltage reached 2.5 V, and then constant current discharging was performed at a current of 0.01C until the voltage reached 1.5 V. The discharge capacity measured then was considered an initial discharge capacity. A pause between the charging and the discharging was 60 minutes. The charging and the discharging were performed at a temperature of 25°C (ambient temperature). Table 1 shows the results.

### [Measurement of resistance]

Initial resistances of the batteries of Example 1, Comparative Example 1, and Comparative Example 2 were measured by the following method. Each battery was charged to a state of charge (SOC) of 50%, and then a voltage drop ΔV was measured at the beginning of constant current discharging at a current I of 0.1C. The value ΔV/I was considered a resistance value of the battery. Table 1 shows the results.

### [High-temperature storage test]

A high-temperature storage test was performed for the batteries of Example 1, Comparative Example 1, and Comparative Example 2 by the following method. After continuous charging at 100°C (ambient temperature) for 500 hours, the charging was stopped and the battery was stored in an environment at 100°C for 100 hours. Subsequently, the temperature was set back to 25°C, and a charge-discharge measurement was performed. The discharge capacity measured then was considered a recovered discharge capacity. Table 1 shows the results.

**[Table 1]**

| | Coating layer | Initial discharge capacity | Resistance value | Recovered discharge capacity |
|---|---|---|---|---|
| Example 1 | LTAF + LCO | 0.95 | 1.26 | 0.91 |
| Comparative Example 1 | N/A | 1.00 | 1.00 | 0.56 |
| Comparative Example 2 | LTAF | 0.88 | 1.54 | 0.84 |

The initial discharge capacities and the resistance values of Example 1 and Comparative Example 2 in Table 1 are values normalized according to the initial discharge capacity and the resistance value of Comparative Example 1. The recovered discharge capacities are values normalized according to the initial discharge capacity of Comparative Example 1.

As shown in Table 1, the initial discharge capacity of the battery of Example 1 was comparable to that of the battery of Comparative Example 1, and was greatly higher than that of the battery of Comparative Example 2.

The resistance value of the battery of Example 1 was slightly higher than that of the battery of Comparative Example 1, but was greatly lower than that of the battery of Comparative Example 2. A lower resistance means superiority in improving rate characteristics and operating at a low temperature.

The recovered discharge capacity, which is the discharge capacity after the high-temperature storage test, of the battery of Example 1 was good. The recovered discharge capacity of the battery of Comparative Example 1 was significantly lower than the initial discharge capacity thereof. That is, the battery of Example 1 had excellent durability to storage at a high temperature in a charged state.

### [Production of solid-state battery]

Solid-state batteries were produced using the coated positive electrode active materials of Example 2, Comparative Example 3, and Comparative Example 4.

### (Production of solid electrolyte material)

Under a dry argon atmosphere, LiBr, YBr₃, LiCl, and YCl₃ which are raw material powders were weighed in a molar ratio of Li:Y:Br:Cl = 3:1:2:4. These were pulverized and mixed in a mortar to give a mixture. Subsequently, the mixture was subjected to milling using a planetary ball mill at 600 rpm for 25 hours. A powder of a solid electrolyte having a composition Li₃YBr₂Cl₄ was obtained in this manner.

LiCl and YCl₃ were weighed in a given molar ratio, and a powder of a solid electrolyte having a composition LiₓYCl₆ was obtained by the same method as for Li₃YBr₂Cl₄.

### (Preparation of positive electrode composite material)

LiₓYCl₆ as the solid electrolyte, the coated positive electrode active material, and a conductive additive were mixed in an agate mortar under a dry argon atmosphere to prepare a positive electrode composite material. A volume ratio between the solid electrolyte and the coated positive electrode active material was 50:50. A carbon nanofiber (VGCF manufactured by SHOWA DENKO K.K.) was used as the conductive additive. A ratio of the mass of the conductive additive to the sum of the mass of the solid electrolyte and the mass of the coated positive electrode active material was 1 wt%. "VGCF" is a registered trademark of SHOWA DENKO K.K.

### (Preparation of negative electrode composite material)

Li₃YBr₂Cl₄ as the solid electrolyte, Li₄Ti₅O₁₂ (average particle diameter: 2.5 µm) as a negative electrode active material, and a conductive additive were mixed in an agate mortar under a dry argon atmosphere to prepare a negative electrode composite material. A volume ratio between the solid electrolyte and the negative electrode active material was 40:60. A carbon nanofiber (VGCF manufactured by SHOWA DENKO K.K.) was used as the conductive additive. A ratio of the mass of the conductive additive to the sum of the mass of the solid electrolyte and the mass of the negative electrode active material was 1 wt%.

### (Production of secondary battery)

An amount of 20.5 mg of the positive electrode composite material, 50 mg of LiₓYCl₆, 60 mg of Li₃YBr₂Cl₄, and 28.8 mg of the negative electrode composite material were stacked in this order inside an insulating outer cylinder having an inner diameter of 9.4 mm. The positive electrode composite material, the solid electrolyte, and the negative electrode composite material were pressed and molded under a pressure of 720 MPa. A laminate including the positive electrode, the electrolyte layer, and the negative electrode were produced in this manner. Secondly, stainless steel current collectors were disposed on the top and the bottom of the laminate, and a current collector lead was fixed to each current collector. Finally, the insulating outer cylinder was isolated from the outside atmosphere by sealing the insulating outer cylinder with an insulating ferrule. A solid-state battery of Example 2 was obtained in this manner.

### (Comparative Example 3)

A coating layer made of lithium niobate was formed at a target thickness of 5 nm on the surface of each NCM particle (average particle diameter: 5 µm). The coating layer made of lithium niobate was formed by a liquid-phase method using lithium ethoxide and niobium ethoxide under a dry air environment having a dew point of -50°C.

A solid-state battery of Comparative Example 3 was produced in the same manner as in Example 2, except that the coated positive electrode active material of Comparative Example 3 was used.

The ionic conductivities of LTAF and lithium niobate are respectively 7 × 10⁻⁶ S/cm and 2 × 10⁻⁷ S/cm. The ionic conductivity of LTAF is far higher than that of lithium niobate. Because of this, even if the thickness of a coating layer including LTAF is at least 10 times the thickness of the thickness of a coating layer including lithium niobate, the resistance value of a battery including a coated active material including the coating layer including LTAF is comparable to that of a battery including a coated active material including the coating layer including lithium niobate. Hence, the target thickness of the coating layer of the coated active material of Example 2 was 40 nm, while that of the coating layer of the coated active material of Comparative Example 3 was 5 nm.

### (Comparative Example 4)

A coated positive electrode active material of Comparative Example 4 was produced in the same manner as in Example 2, except that the second material was not used and that LTAF as the first material was used alone as the coating material. A solid-state battery of Comparative Example 4 was produced in the same manner as in Example 2, except that the coated positive electrode active material of Comparative Example 4 was used.

### [Measurement of resistance]

Resistances of the solid-state batteries of Example 2, Comparative Example 3, and Comparative Example 4 were measured by the following method. After continuous charging at 2.75 V was performed at 100°C (ambient temperature) for 500 hours, the charging was stopped and the battery was stored in an environment at 100°C for 100 hours. Subsequently, impedance measurement was performed in an environment at 0°C to measure resistance values at 1 kHz and 1 Hz. Table 2 shows the results. The resistance values shown in Table 2 are values normalized according to the resistance value of Comparative Example 4.

**[Table 2]**

| | Coating layer | Resistance value (1 kHz) | Resistance value (1 Hz) |
|---|---|---|---|
| Example 2 | LTAF + NCM | 0.90 | 0.90 |
| Comparative Example 3 | Lithium niobate | 1.75 | 1.91 |
| Comparative Example 4 | LTAF | 1.00 | 1.00 |

The solid-state battery of Example 2 had the lowest resistance value. The resistance value of the solid-state battery of Example 2 was lower than that of the solid-state battery of Comparative Example 4.

In the case where the material of the coating layer was changed to lithium niobate, as the results of Comparative Example 3 show, the resistance values of the solid-state battery increased significantly. Incidentally, if the target thickness of the coating layer of the coated active material in Comparative Example 3 is changed to be equivalent to that in Example 2, the resistance of the resulting solid-state battery increases further.

### INDUSTRIAL APPLICABILITY

The technique of the present disclosure is useful for batteries, such as lithium secondary batteries.

## Claims

1. A coated positive electrode active material comprising:
a first positive electrode active material comprising lithium and a transition metal; and
a coating layer coating the first positive electrode active material, wherein
the coating layer comprises: a first material comprising a halide; and a second material comprising at least one selected from the group consisting of a second positive electrode active material capable of absorbing and releasing lithium and a compound comprising the transition metal.

2. The coated positive electrode active material according to claim 1, wherein particles of the second material are dispersed in the coating layer.

3. The coated positive electrode active material according to claim 1, wherein a particle of the second material having a particle diameter smaller than a thickness of the coating layer is present in the coating layer.

4. The coated positive electrode active material according to claim 1, wherein
the second material comprises the compound comprising the transition metal, and
the compound comprising the transition metal is a compound capable of absorbing and releasing lithium.

5. The coated positive electrode active material according to claim 4, wherein the compound comprising the transition metal is formed from a group of elements that is the same as a group of elements forming the first positive electrode active material.

6. The coated positive electrode active material according to claim 4, wherein the compound comprising the transition metal has a composition that is the same as a composition of the first positive electrode active material.

7. The coated positive electrode active material according to claim 1, wherein the first material has lithium ion conductivity.

8. The coated positive electrode active material according to claim 1, wherein
the halide comprises Li, M1, M2, and F,
the M1 is at least one selected from the group consisting of Ti and Nb, and the M2 is at least one selected from the group consisting of Ca, Mg, Al, Y, and Zr.

9. The coated positive electrode active material according to claim 8, wherein
the M1 is Ti, and
the M2 is Al.

10. The coated positive electrode active material according to claim 1, wherein the halide has a composition represented by the following formula (1):
Li_{6-(5-x-2y)b}(Nb_{1-x-y}TiₓM_{y})_{b}F₆ Formula (1),
where M is at least one selected from the group consisting of Ca, Mg, Al, Y, and Zr, and
x, y, and b satisfy 0 < x < 1, 0 < y < 1, 0 < x + y ≤ 1, and 0.8 ≤ b ≤ 1.1.

11. A battery comprising:
a positive electrode comprising the coated positive electrode active material according to claim 1;
a negative electrode; and
an electrolyte layer disposed between the positive electrode and the negative electrode.
